# EUROPEAN PATENT APPLICATION

(11) **EP 4 846 858 A1**
(43) Date of publication of application: **02.12.2026**
(21) Application number: 26181109.5
(22) Date of filing: 26.05.2026
(51) Int. Cl.: A23L 29/262, A21D 2/18, A21D 13/38, A23D 7/005

(54) **OIL-IN-WATER COMPOSITION, FILLING AND FILLED FOOD**

(30) Priority: 27.05.2025 JP 2025087966; 05.09.2025 JP 2025147356
(71) Applicant: SHIN-ETSU CHEMICAL CO., LTD., Chiyoda-ku, Tokyo 1000005 (JP)
(72) Inventor: YAMADA, Kenshin, Niigata, 9428601 (JP); KOMATSUKI, Keiichi, Niigata, 9428601 (JP)
(74) Representative: Schulz Junghans Patentanwälte PartGmbB

(57) **Abstract**

The objective of the present invention is to provide an oil-in-water composition that, when used as a filling for a filled food, can combine various food ingredients and can effectively suppress syneresis caused by heating, regardless of whether additives other than methylcellulose are used, and an oil-in-water composition that exhibits elasticity upon heating and shape retention during reduction in product temperature. The above objective is achieved by an oil-in-water composition comprising a methylcellulose mixture composed of two or more types of methylcellulose with different viscosities from each other, oil and water, wherein the methylcellulose mixture has a viscosity of 500 mPa·s to 40,000 mPa·s when measured with a viscometer at 20 °C using a 2% by mass aqueous solution, and wherein the composition has an oil content of 5% by mass or more and less than 20% by mass relative to the total amount of the oil-in-water composition.

## Description

### Technical Field

The present invention relates to an oil-in-water composition, a filling, and a filled food.

### Background Art

A filled food is a food product in which a single mass of food ingredients (filling) is wrapped with a dough. Known examples of the filled food include Chinese filled bun such as meat bun and sweet bean paste bun, as well as curry bread, meat pie, and curry donut. The filled food is typically subjected to heating treatment, such as steaming, baking, or frying, before eating.

During heat cooking of the filled food, water separation (syneresis), i.e., a decrease in the water content of the filling, may occur due to evaporation of water from the filling or contraction of the filling. Syneresis of the filling may cause problems such as weakening of the dough, thereby impairing shape retention of the filled food, reducing juiciness of the filling, and deteriorating texture of the filled food. Evaporation and expansion of water in the filling during heating may also cause the dough to tear (puncture).

As a filling capable of suppressing a change in weight before and after heat cooking, there is known a filling for a filled food containing a heated ingredient and a water-soluble cellulose ether capable of gelling upon heating (for example, Patent Document 1).

On the other hand, in recent years, a meat-like processed food using alternative meat to livestock meat has been attracting attention, particularly in Europe and the United States, against the background of the increasing prevalence of diets based on health consciousness, environmental concerns, and veganism. Such alternative meat is typically produced using a plant-derived protein ingredient, such as soybean and wheat, as a main food ingredient. However, since no animal-derived ingredient is used, the meat-like processed food using the alternative meat faces many challenges.

For example, when the alternative meat is used as an ingredient of a filling contained in a filled food, animal-derived ingredients, including meat as a main ingredient and egg as a binding agent, are not used. As a result, the filling may exhibit poor shape retention and inferior texture, such as reduced juiciness and softness. Furthermore, during heat cooking of the filled food, increased syneresis (water release) may occur in the filling.

There are known an oil-in-water emulsion containing high-viscosity methylcellulose along with a plant-derived protein ingredient (for example, Patent Document 2), and a livestock and aquatic processed food-like composition containing high-viscosity methylcellulose and a quality improver containing native gellan gum and/or glucomannan (for example, Patent Document 3).

### Citation List

### Patent Documents

[Patent Document 1] Japanese Unexamined Patent Application Publication No. 2011-000119.
[Patent Document 2] Japanese Unexamined Patent Application Publication No. 2023-137691.
[Patent Document 3] Japanese Unexamined Patent Application Publication No. 2022-027746.

### Summary of Invention

### Problems to be Solved by the Invention

However, the filling described in Patent Document 1 uses a heated ingredient, thereby limiting the selection of ingredients.

The oil-in-water emulsion described in Patent Document 2 uses only high-viscosity methylcellulose, which is methylcellulose having a viscosity of 110,000 mm²/s when measured with a viscometer at 20 °C using a 2% by mass aqueous solution. Likewise, the composition described in Patent Document 3 uses only high-viscosity methylcellulose, which is methylcellulose having a viscosity of 146,000 mm²/s when measured with a viscometer at 20 °C using a 2% by mass aqueous solution. According to the findings of the present inventors, a filled food obtained by using only such high-viscosity methylcellulose exhibits insufficient suppression of syneresis occurring during heat cooking.

Furthermore, the composition described in Patent Document 3 uses high-viscosity methylcellulose in combination with native gellan gum and/or glucomannan. As a result, suppressions of syneresis and texture deterioration caused by heat cooking are expected, as compared with the use of high-viscosity methylcellulose alone. However, from a health-conscious perspective that advocates minimizing the use of additives, it is undesirable to increase types of additives used.

Little is known so far about an oil-in-water composition that, when used as a filling for a filled food, can combine various food ingredients and can effectively suppress syneresis caused by heating, regardless of whether additives other than methylcellulose are used. Furthermore, little is known about an oil-in-water composition that exhibits elasticity upon heating and shape retention during reduction in product temperature, while suppressing syneresis caused by heating.

Therefore, problems to be solved by the present invention are to provide an oil-in-water composition that, when used as a filling for a filled food, can combine various food ingredients and can effectively suppress syneresis caused by heating, regardless of whether additives other than methylcellulose are used, and an oil-in-water composition that exhibits elasticity upon heating and shape retention during reduction in product temperature.

### Means of Solving the Problems

As a result of earnest research to solve the above-identified problems, the present inventors have prepared oil-in-water compositions containing a methylcellulose mixture composed of two or more types of methylcellulose whose viscosities are different from one another, rather than high-viscosity methylcellulose alone. Among the oil-in-water compositions prepared in this way, some exhibited good suppression of syneresis, while others did not.

Therefore, the present inventors repeated the trial and error process to obtain an oil-in-water composition exhibiting good suppression of syneresis. Surprisingly, the present inventors succeeded in producing an oil-in-water composition capable of effectively suppressing syneresis caused by heating by adjusting the properties of the methylcellulose mixture to fall within a predetermined range.

More surprisingly, it was found that when the resulting oil-in-water composition is used as a filling for a filled food, various food ingredients can be used, and syneresis caused by heating can be effectively suppressed regardless of whether additives other than methylcellulose, such as native gellan gum and glucomannan, are used. Still more surprisingly, the resulting oil-in-water composition exhibited both elasticity upon heating and shape retention during reduction in product temperature.

Finally, the present inventors have succeeded in inventing, as a solution to the problems of the present invention, an oil-in-water composition that contains a methylcellulose mixture composed of two or more types of methylcelluloses whose viscosities are different from one another and in which the methylcellulose mixture has the predetermined properties; and the like. As such, the present invention has been completed on the basis of the findings and successful examples that were first found or obtained by the present inventors.

Therefore, according to each aspect of the present invention, the following embodiments are provided.
[1] An oil-in-water composition,
   comprising a methylcellulose mixture composed of two or more types of methylcellulose whose viscosities are different from one another, oil and water,
   wherein the methylcellulose mixture has a viscosity of 500 mPa·s to 40,000 mPa·s when measured with a viscometer at 20 °C using a 2% by mass aqueous solution, and
   wherein the composition has an oil content of 5% by mass or more and less than 20% by mass relative to the total amount of the oil-in-water composition.
[2] The oil-in-water composition according to the item [1], wherein the composition has a gel disappearance temperature of 22 °C or lower, a gel strength at 90°C of 5,000 Pa or higher, and/or a syneresis rate of less than 25.0%.
[3] The oil-in-water composition according to the item [1] or [2], wherein the methylcellulose mixture is composed of a first methylcellulose having a viscosity of 60,000 mPa·s to 150,000 mPa·s when measured with a viscometer at 20 °C using a 2% by mass aqueous solution and a second methylcellulose having a viscosity of 3 mPa·s to 5,500 mPa·s when measured with a viscometer at 20 °C using a 2% by mass aqueous solution.
[4] The oil-in-water composition according to the item [3], wherein a mass ratio of the first methylcellulose relative to the second methylcellulose in the methylcellulose mixture (first methylcellulose : second methylcellulose) falls within the range between 2.0:8.0 and 8.0:2.0.
[5] A filling,
   comprising the oil-in-water composition according to any one of the items [1] to [4] and a food ingredient.
[6] The filling according to the item [5], wherein the food ingredient is a non-heated food ingredient.
[7] The filling according to the item [5], substantially free of native gellan gum and glucomannan.
[8] A filled food,
   being a heated, baked, or oil-cooked product of a raw filled food composed of the filling according to the item [5] and a dough wrapping the filling.
[9] The filled food according to the item [8], wherein the filled food is Chinese filled bun, dumpling, shumai, bread, pie, or donut.

### Effects of the Invention

According to the present invention, when used as a filling for a filled food, syneresis of the filling caused by heat cooking of the filled food can be effectively suppressed, elasticity can be exhibited even upon heating, and loss of shape can be suppressed as the temperature of the filled food decreases. In other words, according to the present invention, it is possible to provide an oil-in-water composition having excellent properties of syneresis suppression, elasticity, and shape retention.

According to the present invention, by using the oil-in-water composition having excellent syneresis suppression, elasticity, and shape retention as a filling, it is possible to produce a filled food in which the filling remains juicy, and the dough exhibits good texture even after heating.

According to the present invention, additives other than methylcellulose may or may not be used, the food ingredients used in combination may or may not be heated, and the animal-derived food ingredients such as meat and egg may or may not be used. Therefore, according to the present invention, a variety of filled foods can be produced using different food ingredients, including animal-based filled foods, plant-based filled foods containing no animal-derived food ingredients, vegan-friendly filled foods, and health-conscious filled foods.

### Description of Embodiments

While each embodiment of the present invention will now be described in detail, the present invention may take various forms to the extent that its objective can be achieved.

Unless otherwise specified, each term used herein is used in the meaning commonly used by those skilled in the art, in particular in the food field, the chemistry field and other fields, and should not be construed to have any meaning that is unduly limiting. Also, any speculations and theories herein are made on the basis of the knowledge and experiences of the present inventors and as such, the present invention is not bound by any such speculations and theories.

While the term "composition" is not particularly limited and means composition as well known, it is, for example, composed of a combination of two or more components (for example, raw materials, food ingredients). Each component may be either one alone or a combination of two or more.

The term "and/or" as used herein means either any one of, any combination of two or more of, or combination of all of listed related items.

The term "content" is synonymous with concentration and amount used (amount added), and means the ratio of the amount of a component relative to the total amount of the composition. However, the total amount of the components may not exceed 100%.

The wording "to" for indicating a range of values is intended to include values preceding and following the symbol, and also includes a range included thereby without one of the limit values. For example, "0% to 100%" can be greater than or equal to 0%, less than or equal to 100%, and between 0% and 100%. The terms "more than" and "less than" used herein means the lower and upper limits without including a value following the term, respectively. For example, "more than 1" means a value beyond 1, and "less than 100" means a value below 100.

The terms "include," "comprise," and "contain" mean that an element(s) other than an element(s) as explicitly indicated can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or substantially consist of an element(s) as explicitly indicated. Such elements include limitations such as components, steps, conditions, and parameters.

The number of digits of an integer equals to its significant figure. For example, 1 has one significant figure and 10 has two significant figures. For a decimal number, the number of digits after a decimal point equals to its significant figure. For example, 0.1 has one significant figure and 0.10 has two significant figures. Values are rounded off at one digit below the significant figure. For example, a value of 0.1 represents a numerical range of 0.05 to 0.14.

When used herein, methylcellulose (hereinafter also referred to as "MC") having a viscosity of 60,000 mPa·s to 150,000 mPa·s when measured with a viscometer at 20°C using a 2% by mass aqueous solution is also referred to as a "first MC" while MC having a viscosity of 3 mPa·s to 5,500 mPa·s when measured with a viscometer at 20°C using a 2% by mass aqueous solution is also referred to as a "second MC".

An aspect of the present invention is an oil-in-water composition. The oil-in-water composition according to one embodiment of the present invention is characterized in that the oil-in-water composition contains an MC mixture composed of two or more types of MCs whose viscosities are different from one another and further in that the MC mixture has specific properties.

MC is typically used as a thickening agent. MC having a relatively high viscosity has the effect of providing a more elastic gel during heating and maintaining the shape of the gel even at a lower temperature. Therefore, it is presumed that MC having a relatively high viscosity can function to improve shape retention of an oil-in-water composition in the food form used. However, the present inventors have found that such an oil-in-water composition still exhibits syneresis caused by heat cooking.

The present inventors tried to seek ingredients that would complement the insufficient suppression of syneresis provided by MC having a relatively high viscosity, and come to turn their attention to MC having a relatively low viscosity. In fact, MC having a relatively low viscosity was able to suppress syneresis in an oil-in-water composition more effectively than MC having a relatively high viscosity. However, an oil-in-water composition containing only MC having a relatively low viscosity exhibited lower gel elasticity upon heating, and, furthermore, poor shape retention when the gel temperature decreased such that the gel disappeared during the cooling process.

As mentioned above, the use of either MC having a relatively high viscosity alone or MC having a relatively low viscosity alone was insufficient to form a desirable oil-in-water composition. Based on these findings, the present inventors considered using them in combination and prepared an oil-in-water composition containing both MC having a relatively high viscosity and MC having a relatively low viscosity. Furthermore, by adjusting the properties of the MC mixture composed of these MCs to fall within a predetermined range, the present inventors succeeded in obtaining a desirable oil-in-water composition. Therefore, the oil-in-water composition according to one embodiment of the present invention contains an MC mixture composed of two or more types of methylcellulose whose viscosities are different from one another, and further the MC mixture has specific properties, whereby the oil-in-water composition may exhibit excellent syneresis suppression, excellent elasticity, and excellent shape retention during reduction in product temperature.

As used herein, the term "syneresis suppression" refers to a property capable of reducing the amount of water released from an oil-in-water composition upon heating. An oil-in-water composition having excellent syneresis suppression exhibits a low syneresis rate.

As used herein, the term "elasticity" refers to a property capable of rendering an oil-in-water composition elastic upon heating. An oil-in-water composition having excellent elasticity exhibits high gel strength upon heating.

As used herein, the term "shape retention during reduction in product temperature" refers to a property capable of preventing loss of shape and maintaining elasticity (gel formation) of an oil-in-water composition even at a relatively low temperature during the cooling process after heating. An oil-in-water composition having excellent shape retention during reduction in product temperature exhibits a low gel disappearance temperature.

As used herein, any one, two, or all three of syneresis suppression, elasticity, and shape retention during reduction in product temperature may be collectively referred to as a "useful property."

### <Methylcellulose (MC)>

MC is a water-soluble cellulose ether formed by introducing methoxy groups into cellulose. While the two or more types of MCs constituting the MC mixture may be those having different viscosities from one another, the MC mixture may preferably contain the first MC and the second MC.

The first MC may have a viscosity of 60,000 mPa·s to 150,000 mPa·s when measured with a viscometer at 20 °C using a 2% by mass aqueous solution. For example, the first MC may have, from the viewpoint of elasticity and/or shape retention during reduction in product temperature imparted to the oil-in-water composition, preferably a viscosity of 60,000 mPa·s to 120,000 mPa·s, more preferably a viscosity of 60,000 mPa·s to 100,000 mPa·s, and still more preferably a viscosity of 70,000 mPa·s to 80,000 mPa·s, when measured with a viscometer at 20 °C using a 2% by mass aqueous solution.

The second MC may have a viscosity of 3 mPa·s to 5,500 mPa·s when measured with a viscometer at 20 °C using a 2% by mass aqueous solution. For example, the second MC may have, from the viewpoint of syneresis suppression imparted to the oil-in-water composition, preferably a viscosity of 3 mPa·s to 4,000 mPa·s, more preferably a viscosity of 3 mPa·s to 2,000 mPa·s, still more preferably a viscosity of 3.5 mPa·s to 500 mPa·s, and even still more preferably a viscosity of 3.5 mPa·s to 100 mPa·s, when measured with a viscometer at 20 °C using a 2% by mass aqueous solution.

The MC mixture composed of two or more types of MCs whose viscosities are different from one another, preferably composed of the first MC and the second MC, has a viscosity in a predetermined range.

The MC mixture may have a viscosity of 500 mPa·s to 40,000 mPa·s when measured with a viscometer at 20 °C using a 2% by mass aqueous solution. For example, the MC mixture may have preferably a viscosity of 700 mPa·s to 30,000 mPa·s, more preferably a viscosity of 800 mPa·s to 20,000 mPa·s, still more preferably a viscosity of 850 mPa·s to 10,000 mPa·s, and even still more preferably a viscosity of 850 mPa· s to 9,000 mPa·s, when measured with a viscometer at 20 °C using a 2% by mass aqueous solution. When using the MC mixture having a viscosity of less than 500 mPa·s when measured with a viscometer at 20 °C using a 2% by mass aqueous solution, the resulting oil-in-water composition tends to exhibit poor elasticity upon heating due to a low gel strength and, furthermore, poor shape retention during reduction in product temperature due to a high gel disappearance temperature. On the other hand, when using the MC mixture having a viscosity of more than 40,000 mPa·s when measured with a viscometer at 20 °C using a 2% by mass aqueous solution, the resulting oil-in-water composition tends to exhibit poor syneresis suppression.

The viscosity at 20 °C of a 2% by mass aqueous solution of MC or the MC mixture is measured using an Ubbelohde type viscometer in the case where the viscosity is less than 300 mPa·s, or using a single cylinder type rotational viscometer in the case where the viscosity is equal to or more than 300 mPa·s, as described in Examples below.

While the MCs that constitutes the MC mixture are not particularly limited in terms of other properties, it is preferable that such other properties do not interfere with the solution to the problems of the present invention. For example, the amount of methoxy groups in MC is preferably in the range between 20% by mass and 40% by mass, more preferably in the range between 25% by mass and 35% by mass, still more preferably in the range between 26% by mass and 33% by mass, and even still more preferably in the range between 28% by mass and 31% by mass, from the viewpoint of the useful property imparted to the oil-in-water composition.

The degree of substitution (DS) of methoxy groups in MC is preferably in the range between 1.00 and 2.10, more preferably in the range between 1.40 and 2.05, still more preferably in the range between 1.60 and 2.00, and even still more preferably in the range between 1.70 and 1.90, from the viewpoint of the useful property imparted to the oil-in-water composition. DS of methoxy groups in MC refers to the average number of methoxy groups per unit of anhydrous glucose.

The amount and DS of methoxy groups in MC are the value measured by the measurement method for the section "methylcellulose" described in Japanese Pharmacopoeia, 18th edition, as described in Examples below, or the value determined by converting the value.

When the MC mixture is composed of the first MC and the second MC, examples of the mass ratio of the first MC relative to the second MC in the MC mixture (first methylcellulose : second methylcellulose) include preferably 2.0:8.0 to 8.0:2.0, more preferably 3.0:7.0 to 7.0:3.0, still more preferably 3.0:7.0 to 6.0:4.0, and even still more preferably 3.0:7.0 to 5.5:4.5, from the viewpoint of syneresis suppression and shape retention during reduction in product temperature imparted to the oil-in-water composition. As such, it is preferable that the first MC and the second MC be balanced in quantity in the MC mixture so that the resulting oil-in-water composition can exhibit better syneresis suppression and shape retention during reduction in product temperature.

Examples of the content of the MC mixture in the oil-in-water composition include, relative to the total amount of the oil-in-water composition, preferably 1.0% by mass to 5.0% by mass, more preferably 1.5% by mass to 4.0% by mass, still more preferably 1.6% by mass to 3.0% by mass, and even still more preferably 1.7% by mass to 2.5% by mass or 1.8% by mass to 2.5% by mass, from the viewpoint of the useful property imparted to the oil-in-water composition.

While the method of obtaining MC is not particularly limited, MC may be produced by known production methods or obtained as commercially available products.

One example of the method of producing MC may include the steps of reacting cellulose pulp with alkali to obtain an alkali cellulose, reacting the obtained alkali cellulose with a methylating agent to obtain a reactant, and then washing, drying, and pulverizing the obtained reactant to prepare methylcellulose.

### <Other components than MC>

In addition to MC, the oil-in-water composition according to one embodiment of the present invention contains oil and water. The oil-in-water composition according to one embodiment of the present invention may further contain other components in addition to the above components.

### <Oil>

Oil may be any oil and fat commonly used in preparing oil-in-water compositions. Examples of oil include plant-derived oil and fat, specifically coconut oil, palm oil, soybean oil, rapeseed oil, rice oil, cottonseed oil, corn oil, sunflower oil, olive oil, safflower oil, kapok oil, salad oil, and palm kernel oil.

As long as the content of oil is an amount normally used in preparing oil-in-water compositions, the content is not particularly limited. Examples of the content include preferably 5% by mass to 20% by mass, more preferably 7.5% by mass to 20% by mass, and still more preferably 10% by mass to 20% by mass, from the viewpoint of no separation from water.

### <Water>

Water may be water used in the preparation of normal oil-in-water compositions. Examples of water include ion-exchanged water, distilled water and tap water. As long as water can dissolve MC which is a water-soluble cellulose ether, water may be an aqueous solution containing salt, water-soluble polymer, or any other component.

As long as the content of water is an amount normally used in preparing oil-in-water compositions, the content is not particularly limited. Examples of the content include preferably 75% by mass to 95% by mass, more preferably 75% by mass to 90% by mass, and still more preferably 80% by mass to 90% by mass, from the viewpoint of no separation from oil.

### <Additives>

The oil-in-water composition according to one embodiment of the present invention may contain additives as other components so that the oil-in-water composition can exhibit desired properties. Examples of additives include additives normally contained in preparing oil-in-water compositions, such as an emulsifying agent, a thickening agent, a coloring agent, a preservative, and an antioxidant.

Examples of the emulsifying agent include sucrose fatty acid ester, polyglycerol fatty acid ester, sorbitan fatty acid ester and propylene glycol fatty acid ester.

Examples of the thickening agent include processed starch, unprocessed starch, guar gum, xanthan gum, tamarind seed gum, locust bean gum, Arabic gum, alginates, pectin, pullulan, agar, gelatin and microcrystalline cellulose.

Examples of the coloring agent include glucumin, carotene and crotin.

Examples of the preservative include sorbic acid, potassium sorbate, ethyl paraoxybenzoate and propyl paraoxybenzoate.

Examples of the antioxidant include L-ascorbic acid, sodium L-ascorbate, γ-oryzanol, catechin, dl-α-tocopherol and tocopherol acetate.

The content of additives is not particularly limited as long as the content does not prevent the oil-in-water composition from solving the problems of the present invention. Examples of the content is preferably 0% by mass to 30% by mass, more preferably 0% by mass to 20% by mass, still more preferably 0% by mass to 10% by mass, and even still more preferably 0% by mass to 1% by mass. On the other hand, when using the oil-in-water composition according to one embodiment of the present invention as a component of a filling, from the viewpoint of health-consciousness favoring the absence of additives, the oil-in-water composition is preferably substantially free of additives other than MC, and more preferably substantially free of native gellan gum and/or glucomannan.

The expression "substantially free of" additives means that such additives are not intentionally contained, except for the case where such additives are unavoidably contained by raw materials containing such additives together with other components or by executing manufacturing steps using such raw materials. Therefore, the expression "substantially free of" additives means to be completely free of such additives, or to contain such additives in a very small amount, even if such additives are contained. The content of such additives may be preferably in the range between 0% by mass and 0.1% by mass.

### <Method of producing oil-in-water composition>

The oil-in-water composition according to one embodiment of the present invention is obtained by mixing the MC mixture, oil, and water, and optionally other components. The order of addition of each component is not particularly limited, and the oil-in-water composition may be produced by any steps. For example, in order to uniformly disperse MCs, it is preferable to mix the MC mixture with oil followed by adding water, and optionally other components to the resultant, and then mixing them. In order to effectively dissolve MCs, the resulting mixture may be preferably cooled. Furthermore, water and additives may be used after cooling, or may be added while cooling.

Examples of the method include a method including mixing the MC mixture composed of the first MC and the second MC with oil to obtain an MC suspension in which the MCs are dispersed in oil, and then mixing the MC suspension with water and optionally other components, and optionally cooling the resulting mixture, to obtain an oil-in-water type of semi-solid or emulsified liquid composition.

Specific examples of the method of producing the oil-in-water composition according to one embodiment of the present invention include the methods as described in Examples below.

### <Property of oil-in-water composition>

The oil-in-water composition according to one embodiment of the present invention has properties of syneresis suppression, elasticity, and shape retention during reduction in product temperature. The oil-in-water composition according to one embodiment of the present invention preferably freezes at -15 °C to form an ice-like solid. Furthermore, the oil-in-water composition according to one embodiment of the present invention is preferably in a gel form when heated from a frozen state in a microwave oven, a steamer, or another heating device.

Syneresis suppression, elasticity, and shape retention during reduction in product temperature imparted to the oil-in-water composition according to one embodiment of the present invention are evaluated by the syneresis rate, gel strength, and gel disappearance temperature by the methods described in Examples below, respectively. For example, the useful property is preferably such that all items are rated as "++" or "+", and more preferably such that all items are rated as "++".

In certain embodiments, the syneresis rate is calculated according to the following formula based on the weight and the amount of water separated after freezing and subsequent heat treatment (the weight difference before and after heating treatment). 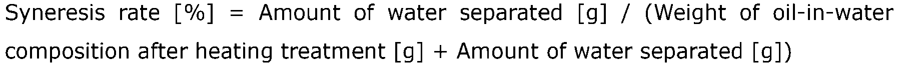 Syneresis rate [%] = Amount of water separated [g] / (Weight of oil-in-water composition after heating treatment [g] + Amount of water separated [g])

In certain embodiments, the freeze and heat treatment comprises or consists of storage at -15°C for one day followed by steam heating treatment for 1 hour.

In certain embodiments, the steam heating treatment is performed at a temperature of 85 °C and a humidity of 95% RH.

In certain embodiments, the gel disappearance temperature is determined using a rheometer.

In certain embodiments, the gel strength is determined using a rheometer.

In certain embodiments, the rheometer is pre-tempered to 5 °C. In certain embodiments, the oil-in-water composition is poured into a measuring cup using a bob cylinder. In certain embodiments, the rheometer uses a frequency of 1 Hz. In certain embodiments, the rheometer uses a strain of 1% amplitude. In certain embodiments, the measurement section is heated from 5 °C to 90 °C at a rate of 2 °C per minute, then cooled from 90 °C to 5 °C at a rate of 2 °C per minute, and the storage modulus G' is measured at one point every 30 seconds. In certain embodiments, the storage modulus G' measured at the time when the temperature of the sample measurement section reached 90 °C during the heating process is defined as the gel strength of the oil-in-water composition. In certain embodiments, the temperature at which the storage modulus G' no longer decreased by 1 Pa or more when the temperature decreased by 1 °C during the cooling process is defined as the gel disappearance temperature of the oil-in-water composition.

The oil-in-water composition according to one embodiment of the present invention may preferably have various properties, such as gel disappearance temperature, gel strength, and syneresis rate, falling within predetermined ranges, depending on the intended use. For example, the oil-in-water composition according to one embodiment of the present invention may preferably have a gel disappearance temperature of 22 °C or lower, as measured under conditions of a frequency of 1 Hz and a strain of 1%, to exhibit stable shape retention even at a room temperature of approximately 25 °C. In other words, examples of the gel disappearance temperature of the oil-in-water composition according to one embodiment of the present invention include preferably 22 °C or lower, more preferably 20 °C or lower, and still more preferably 18 °C or lower, from the viewpoint of shape retention during reduction in product temperature. The lower limit is not particularly limited, but is typically 12 °C. When the gel disappearance temperature exceeds 23 °C, the shape retention during reduction in product temperature may deteriorate, such that a food using such an oil-in-water composition tends to exhibit poor texture and reduced juiciness when consumed.

The gel disappearance temperature of the oil-in-water composition according to one embodiment of the present invention is measured using a rheometer, such as MCR502 manufactured by Anton Paar, under conditions of a frequency of 1 Hz and a strain of 1%, as described in Examples below.

Examples of the gel strength at 90 °C of the oil-in-water composition according to one embodiment of the present invention include preferably 5,000 Pa or more, more preferably 5,100 Pa to 12,000 Pa, and still more preferably 5,100 Pa to 9,000 Pa, from the viewpoint of heat resistance and food texture. The gel strength is measured using a rheometer, such as MCR502 manufactured by Anton Paar, under conditions of a frequency of 1 Hz and a strain of 1%, as described in Examples below.

Examples of the syneresis rate of the oil-in-water composition according to one embodiment of the present invention include preferably less than 25.0%, more preferably 20.0% or lower, and still more preferably 18.0% or lower, from the viewpoint of shape retention. The lower limit is not particularly limited, but is typically 0%. The syneresis rate is measured according to the method described in Examples below.

### <Application of oil-in-water composition>

The oil-in-water composition according to one embodiment of the present invention may be used in various forms. Examples of applications focusing on the useful property include preferably a food product, and more preferably a filling for a filled food. Furthermore, the oil-in-water composition according to one embodiment of the present invention may be contained as an ingredient in heat-cooked processed foods such as hamburger, meatball, meat dumpling, meatloaf, meat pâté, tsukune, ham, and sausage, for the purpose of improving juiciness and texture.

### <Filling>

Another aspect of the present invention relates to a filling used as a content (paste) for a filled food. The filling according to one embodiment of the present invention contains the oil-in-water composition according to one embodiment of the present invention, and a food ingredient.

The content of the oil-in-water composition according to one embodiment of the present invention may be an amount sufficient to impart the useful property to the filling. Examples of the content include, relative to 100 parts by mass of the filling, preferably 5 parts by mass to 50 parts by mass, more preferably 10 parts by mass to 40 parts by mass, and still more preferably 15 parts by mass to 30 mass parts. Therefore, examples of the content include, relative to the total amount of the filling, preferably 5% by mass to 50% by mass, more preferably 10% by mass to 40% by mass, and still more preferably 15% by mass to 30% by mass.

### <Food ingredient>

The food ingredient may be any ingredient that allows the filling to function as a content of a food. Examples of the food ingredient include: water, salt, mirin, sesame oil, vinegar, sugar, sweetener such as stevia preparation, soy sauce, miso, amino acids such as monosodium glutamate, seasonings such as yeast extract and ribonucleotide; livestock meat derived from cattle, pig, chicken, sheep, goat, horse, reindeer, water buffalo, yak, camel, donkey, mule, rabbit, duck, turkey, guinea fowl, goose, quail, and rock pigeon; seafood such as shrimp, tuna, squid, scallop, crab, salmon, and cod roe; vegetables such as radish, onion, Welsh onion, carrot, lotus root, ginger, garlic, cabbage, green pepper, tomato, corn, bamboo shoot, kale, Chinese cabbage, and potato; mushrooms such as shiitake mushroom, maitake mushroom, and wood ear mushroom; fruits such as strawberry, orange, raisin, apple, kiwi fruit, pineapple, Japanese apricot, banana, fig, peach, and pear; seeds and nuts such as peanut, almond, macadamia nut, cashew nut, and chestnut; beans such as adzuki bean, pea, and soybean; dairy products such as milk, fresh cream, condensed milk, whole milk powder, skim milk powder, cheese, and yogurt; beverages for enjoyment such as coffee, tea, cocoa, beer, wine, whisky, and shochu; spices such as pepper, mustard, chili pepper, cardamom, cinnamon, saffron, coriander, nutmeg, parsley, basil, sage, thyme, oregano, dill, garlic powder, and onion powder; cereals such as corn, wheat, barley, and rice; and processed foods such as tofu, fried tofu, konjac, soybean protein, dry yeast, and baking powder.

The food ingredient may be subjected to processing treatment such as grating, pasting, grinding, shredding, dicing, and cutting into rectangle. As used herein, monosodium glutamate is not classified as an additive, but rather as a seasoning. Furthermore, water and seasoning oil, including sesame oil, are classified as seasonings if they are not used in producing the oil-in-water composition.

While the content of the food ingredient is not particularly limited, examples of the content include, relative to the total amount of the filling, preferably 1% by mass to 99% by mass, more preferably 5% by mass to 50% by mass, and still more preferably 8% by mass to 45% by mass. Examples of the content of seasonings in the food ingredient include, relative to the total amount of the filling, preferably 0% by mass to 25% by mass, more preferably 5% by mass to 20% by mass, and still more preferably 8% by mass to 15% by mass. Examples of the content of ingredients other than seasonings in the food ingredient include, relative to the total amount of the filling, preferably 0% by mass to 50% by mass, more preferably 5% by mass to 45% by mass, and still more preferably 10% by mass to 40% by mass.

While the filling according to one embodiment of the present invention may contain animal-derived food ingredients such as meat, seafood, egg, milk, and gelatin, the filling is preferably substantially free of such animal-derived food ingredients in order to be suitable for vegan use. Therefore, the filling according to one embodiment of the present invention is preferably substantially free of such animal-derived food ingredients so as to be suitable for vegan use, by using plant-derived protein materials, such as grains and beans, as the food ingredient in place of meat.

The filling according to one embodiment of the present invention may preferably contain a food ingredient that may cause syneresis upon heating. Examples of the food ingredient that may cause syneresis upon heating include meat, seafood, vegetables, mushrooms, fruits, and beans.

The food ingredient may be either an unheated food ingredient or a heated food ingredient. Even when the filling according to one embodiment of the present invention contains an unheated food ingredient, syneresis upon heating may be suppressed by the oil-in-water composition according to one embodiment of the present invention.

The filling according to one embodiment of the present invention may contain additives as other components in addition to the oil-in-water composition according to one embodiment of the present invention, and the food ingredient. With respect to additives, reference may be made to the section <Additives> above. The filling is preferably substantially free of additives other than MC, and more preferably substantially free of native gellan gum and/or glucomannan.

The term "native gellan gum" relates to high-acyl gellan gum. High-acyl gellan gum comprises approximately one acetyl moiety and one glyceryl moiety per tetrasaccharide unit of glucose-glucuronic acid-glucose-rhamnose. The term "native gellan gum" distinguishes the gellan gum from low-acyl gellan gum (also termed deacylated gellan gum) which has significantly less than one acetyl moiety and one glyceryl moiety per tetrasaccharide unit of glucose-glucuronic acid-glucose-rhamnose. In certain embodiments, native gellan gum comprises all gellan gum compounds which have an acetyl moiety and a glyceryl moiety per tetrasaccharide unit of glucose-glucuronic acid-glucose-rhamnose.

In certain embodiments, native gellan gum is characterized by comprising more than 1 wt% of acetyl moieties and more than 1 wt% of glyceryl moieties.

The filling according to one embodiment of the present invention may be produced by mixing the oil-in-water composition according to one embodiment of the present invention and the food ingredient, and optionally other components including additives. The order of addition of each component is not particularly limited, and the filling may be produced by any methods. Examples of such methods include preferably mixing the oil-in-water composition according to one embodiment of the present invention with ingredients obtained by mixing the food ingredient and optionally additives.

Specific examples of the method of producing the filling according to one embodiment of the present invention include the methods as described in Examples below.

### <Filled food>

Another aspect of the present invention is a filled food in which a dough is used to wrap the filling. The filled food according to one embodiment of the present invention is obtained by subjecting a raw filled food composed of the filling according to one embodiment of the present invention and a dough wrapping the filling to heating treatment, baking treatment or deep-frying treatment. Examples of deep-frying treatment include frying with oil.

With respect to the food ingredient used for the dough, reference may be made to the section <Food ingredient> above. The dough may be appropriately selected depending on the type of filled food to be prepared. The dough may be fermented in advance as needed, or the filled food may be further fermented after the filling containing the food ingredient is wrapped in the dough.

The method of wrapping the filling in the dough is not particularly limited, and may be appropriately selected depending on the type of filled food to be prepared.

The raw filled food in which the filling is wrapped in the dough is subjected to heating treatment, baking treatment, or deep-frying treatment. The temperature, time, and other conditions for heating treatment, baking treatment, and deep-frying treatment may be appropriately selected depending on the type of filled food to be prepared.

Examples of the filled food include, but are not limited to, Chinese filled bun, dumpling, shumai, bread, pie, and donut.

### Examples

While the present invention will now be described in further detail with reference to Examples and Comparative Examples, the present invention is not limited to what is described in these Examples and Comparative Examples.

### <Preparation of oil-in-water composition>

### [Materials used]

For methylcellulose (MC), those listed in Table 1 (all manufactured by Shin-Etsu Chemical) were used. The edible oil used was rapeseed oil ("Nisshin Canola Oil"; manufactured by Nisshin Oillio Group), and the water used was purified water.

### [Example 1]

The edible oil weighing 9.0 g was added to a beaker, and then the first MC powder and the second MC powder weighed as shown in Table 2, respectively, were added to the same beaker. The contents in the beaker were stirred with a spatula for 30 seconds to thoroughly disperse the MCs in the edible oil. The obtained MC suspension and 49.8 g of water warmed to 35 °C were sequentially added to a food processor ("YFA-202-W"; manufactured by Yamazen) and stirred for 2 minutes to obtain an oil-in-water composition.

### [Examples 2 to 10 and Comparative Examples 1 to 6]

The oil-in-water compositions were obtained in the same manner as in Example 1, except that the first MC powder and the second MC powder were changed to the first MC powder and the second MC powder as listed in Table 2, respectively. For Comparative Examples 1, 2, 4, and 6, only one type of MC (first MC) was used.

### <Evaluation item>

### [Viscosity of first MC, second MC, or MC mixture]

For the viscosity of the first MC, the second MC, or the MC mixture (hereinafter also collectively referred to as the "MC/MC mixture"), a 2% by mass aqueous solution (or an aqueous solution at a predetermined concentration) of each was prepared, and the viscosity of the aqueous solution at 20 °C was determined using the following viscometer in accordance with the General Tests "2.53 Viscosity Determination" of The Japanese Pharmacopoeia, 18th Edition (https://www.mhlw.go.jp/content/11120000/000945683.pdf): when the viscosity was less than 300 mPa·s, an Ubbelohde-type viscometer was used according to the section "1. Method I Viscosity measurement by capillary tube viscometer," whereas when the viscosity was equal to or more than 300 mPa·s, a single cylinder-type rotational viscometer was used according to the section "2. Method II Viscosity measurement by rotational viscometer."

The 2% by mass aqueous solution of MC/MC mixture was prepared in the following manner.

An amount of the MC/MC mixture corresponding to 6.0 g of the dried product was accurately weighed into a jar (diameter: 65 mm, height: 120 mm, volume: 350 ml). To the jar, hot water at 98 °C was further added to obtain 300.0 g of contents. The jar was capped and the contents were stirred at 350 rpm to 450 rpm for 20 minutes using an agitator until the contents in the jar reached a state of uniform dispersion. Subsequently, the resulting dispersion was stirred for 40 minutes in a water bath at 5 °C or less to dissolve the MC/MC mixture in the dispersion to obtain a 2% by mass aqueous solution of MC/MC mixture. In the same manner, each aqueous solution at a predetermined concentration was prepared by adjusting the amount of the MC/MC mixture corresponding to a predetermined amount of the dry product.

### [Amount (% by mass) and degree of substitution (DS) of methoxy groups (MeO) in MC]

The amount of MeO in MC was determined according to the quantitative method "Assay" described in the section "Methylcellulose" in The Japanese Pharmacopoeia, 18th Edition. DS of MeO in MC was determined by converting the amount of MeO obtained.

### [Syneresis rate]

Into a silicone mold having a diameter of 4 cm and a height of 2 cm, 9.0 g of the oil-in-water composition was transferred, stored at 5 °C for 1 day for cooling, and then stored at -15 °C for 1 day for freezing. After freezing, the oil-in-water composition was removed from the silicone mold and placed onto a glass Petri dish, and subjected to steam heating treatment for 1 hour in a small constant temperature and humidity chamber ("IW223"; manufactured by Yamato Scientific) adjusted at a temperature of 85 °C and a humidity of 95% RH. The weight of the oil-in-water composition after heating treatment was measured, and the syneresis rate was calculated according to the following formula based on the weight and the amount of water separated (the weight difference before and after heating treatment). 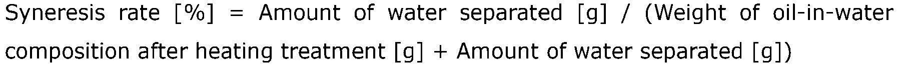 Syneresis rate [%] = Amount of water separated [g] / (Weight of oil-in-water composition after heating treatment [g] + Amount of water separated [g])

A syneresis rate of 30.0% or more was evaluated as "-", a syneresis rate of more than 25.0% and less than 30.0% was evaluated as "+", and a syneresis rate of 25.0% or less was evaluated as "++".

### [Gel strength and gel disappearance temperature]

The gel strength and gel disappearance temperature of the oil-in-water composition were determined using a rheometer ("MCR502"; manufactured by Anton Paar) in the following manner.

The prepared oil-in-water composition was degassed by kneading under reduced pressure for 1 minute at a rotation speed of 2,000 rpm using a degassing kneader ("ARV-310" manufactured by Thinky), and then stored at 5 °C for 1 day for cooling. The sample measurement section of the rheometer was pre-tempered to 5 °C. The oil-in-water composition after cooling was poured into a CC27 measuring cup (a coaxial double cylindrical aluminum container with a diameter of 30 mm and a height of 80 mm) up to the marked line (25 ml). The measurement was started for the oil-in-water composition poured into the measuring cup using a bob cylinder (26.7 mm in diameter and 40.0 mm in height: CC27) at a frequency of 1 Hz and a strain of 1% amplitude. The measurement section was heated from 5 °C to 90 °C at a rate of 2 °C per minute, then cooled from 90 °C to 5 °C at a rate of 2 °C per minute, and the storage modulus G' was measured at one point every 30 seconds. The storage modulus G' measured at the time when the temperature of the sample measurement section reached 90 °C during the heating process was defined as the gel strength of the oil-in-water composition. The temperature at which the storage modulus G' no longer decreased by 1 Pa or more when the temperature decreased by 1 °C during the cooling process was defined as the gel disappearance temperature of the oil-in-water composition.

A gel strength of less than 4,500 Pa was evaluated as "-", a gel strength of 4,500 Pa or more and less than 5,000 Pa was evaluated as "+", and a gel strength of 5,000 Pa or more was evaluated as "++".

A gel disappearance temperature of 24 °C or higher was evaluated as "-", a gel disappearance temperature of higher than 22 °C and lower than 24 °C was evaluated as "+", and a gel disappearance temperature of 22 °C or lower was evaluated as "++".

### <Evaluation results>

Table 1 shows the evaluation results for the viscosity, amount of MeO, and DS of MeO of the first and second MCs used. Table 2 shows the evaluation results for the viscosity of the MC mixture. Table 2 shows the evaluation results for the syneresis rate, gel strength, and gel disappearance temperature of the oil-in-water composition.

As shown in Table 2, the oil-in-water compositions of Examples 1 to 4 exhibited significantly lower gel disappearance temperatures and thus excellent shape retention during reduction in product temperature, as compared with the oil-in-water composition of Comparative Example 1, which had a comparable viscosity but contained only the first MC. In particular, it was found that the oil-in-water compositions of Examples 1 to 4 exhibited lower gel disappearance temperatures, thereby maintaining a gel state even during food processing and consumption at room temperature (approximately 25 °C).

Furthermore, the oil-in-water compositions of Examples 1 to 4 exhibited significantly lower syneresis rates and thus excellent syneresis suppression, as compared with the oil-in-water composition of Comparative Example 2, which had a comparable viscosity but contained only the first MC.

In addition, the oil-in-water compositions of Examples 1 to 4 had gel strengths comparable to those of the oil-in-water compositions of Comparative Examples 1 and 2 having comparable viscosities, and therefore no significant differences in food texture were observed among them. Furthermore, the oil-in-water composition of Comparative Example 6, which had a relatively low viscosity and contained only the first MC, exhibited inferior gel disappearance temperature and syneresis rate, as well as inferior gel strength.

On the other hand, the oil-in-water compositions of Examples 5 to 10, in which the mass ratio of the first MC to the second MC was adjusted such that the viscosity at 20 °C of a 2% by mass aqueous solution of the MC mixture fell within the range of 500 mPa·s to 40,000 mPa·s, exhibited low syneresis rates and low gel disappearance temperatures, similar to the oil-in-water compositions of Examples 1 to 4.

In contrast, the oil-in-water composition of Comparative Example 3, in which the viscosity of the MC mixture was less than 500 mPa·s, exhibited a high gel disappearance temperature of 24 °C, resulting in insufficient shape retention at room temperature, and further exhibited low gel strength and inferior heat resistance as compared with those of the Examples. Furthermore, the oil-in-water compositions of Comparative Examples 4 and 5, in which the viscosity of the MC mixture exceeded 40,000 mPa·s, exhibited significantly high syneresis rates.

From the above results, it was found that an oil-in-water composition using an MC mixture composed of two or more types of MCs whose viscosities are different from one another, in which the viscosity of the MC mixture falls within a predetermined range, exhibits high syneresis suppression, high gel strength, and low gel disappearance temperature, thereby providing excellent elasticity and shape retention during reduction in product temperature.

**[Table 1]**

| Cellulose ethers | Viscosity of 2% by mass aqueous solution | MeO group | |
|---|---|---|---|
| | [mPa·s] | [% by mass] | [DS] |
| MC-1 | 3.94 | 29.0 | 1.74 |
| MC-2 | 15.8 | 29.1 | 1.75 |
| MC-3 | 99.6 | 29.5 | 1.78 |
| MC-4 | 5020 | 29.3 | 1.76 |
| MC-5 | 7810 | 29.8 | 1.80 |
| MC-6 | 71300 | 30.2 | 1.83 |
| MC-7 | 61600 | 30.4 | 1.84 |
| MC-8 | 99.8 | 29.4 | 1.77 |
| MC-9 | 6800 | 29.8 | 1.80 |

**[Table 2]**

| | First MC | Second MC | Edible oil | Water | Viscosity of aqueous solution | Viscosity of aqueous solution | Syneresis rate | | Gel strength | | Gel disappearance temperature | |
|---|---|---|---|---|---|---|---|---|---|---|---|---|
| | [% by mass] | [% by mass] | [% by mass] | [% by mass] | [mPa·s] | [mPa·s] | [%] | Rated | [Pa] | Rated | [°C] | Rated |
| Example 1 | MC-6 [1.2] | MC-1 [0.8] | Rapeseed oil [15.0] | Purified water [83.0] | 6,310 (2% by mass aqueous solution) | 6,310 (2% by mass aqueous solution) | 19.4 | ++ | 7,933 | ++ | 18 | ++ |
| Example 2 | MC-6 [11] | MC-2 [0.9] | Rapeseed oil [15.0] | Purified water [83.0] | 7,130 (2% by mass aqueous solution) | 7,130 (2% by mass aqueous solution) | 14.8 | ++ | 7,822 | ++ | 18 | ++ |
| Example 3 | MC-6 [1.0] | MC-3 [1.0] | Rapeseed oil [15.0] | Purified water [83.0] | 7,050 (2% by mass aqueous solution) | 7,050 (2% by mass aqueous solution) | 12.7 | ++ | 8,441 | ++ | 18 | ++ |
| Example 4 | MC-6 [0.5] | MC-4 [1.5] | Rapeseed oil [15.0] | Purified water [83.0] | 8,110 (2% by mass aqueous solution) | 8,110 (2% by mass aqueous solution) | 17.7 | ++ | 7,951 | ++ | 22 | ++ |
| Example 5 | MC-6 [0.4] | MC-3 [1.6] | Rapeseed oil [15.0] | Purified water [83.0] | 893 (2% by mass aqueous solution) | 893 (2% by mass aqueous solution) | 10.6 | ++ | 5,275 | ++ | 22 | ++ |
| Example 6 | MC-6 [0.6] | MC-1 [1.4] | Rapeseed oil [15.0] | Purified water [83.0] | 869 (2% by mass aqueous solution) | 869 (2% by mass aqueous solution) | 12.8 | ++ | 5,149 | ++ | 18 | ++ |
| Example 7 | MC-6 [1.6] | MC-2 [0.4] | Rapeseed oil [15.0] | Purified water [83.0] | 37,250 (2% by mass aqueous solution) | 37,250 (2% by mass aqueous solution) | 22.9 | ++ | 11,215 | ++ | 16 | ++ |
| Example 8 | MC-6 [0.75] | MC-3 [0.75] | Rapeseed oil [15.1] | Purified water [83.4] | 2,140 (15% by mass aqueous solution) | 7,050 (2% by mass aqueous solution) | 11.5 | ++ | 5,101 | ++ | 20 | ++ |
| Example 9 | MC-6 [2.5] | MC-3 [2.5] | Rapeseed oil [14.5] | Purified water [80.5] | 236,000 (5% by mass aqueous solution) | 7,050 (2% by mass aqueous solution) | 24.9 | ++ | 40,089 | ++ | 14 | ++ |
| Example 10 | MC-7 [1.7] | MC-8 [1.7] | Rapeseed oil [10.6] | Purified water [86.0] | 96,600 (3.4% by mass aqueous solution) | 7,020 (2% by mass aqueous solution) | 23.9 | ++ | 19,364 | ++ | 16 | ++ |
| Comparative Example 1 | MC-5 [2.0] | | Rapeseed oil [15.0] | Purified water [83.0] | 7,810 (2% by mass aqueous solution) | 7,810 (2% by mass aqueous solution) | 18.7 | ++ | 7,313 | ++ | 25 | - |
| Comparative Example 2 | MC-6 [1.2] | | Rapeseed oil [15.2] | Purified water [83.6] | 7,600 (1.2% by mass aqueous solution) | 71,300 (2% by mass aqueous solution) | 36.1 | - | 8,007 | ++ | 18 | ++ |
| Comparative Example 3 | MC-6 [0.3] | MC-3 [1.7] | Rapeseed oil [15.0] | Purified water [83.0] | 452 (2% by mass aqueous solution) | 452 (2% by mass aqueous solution) | 9.3 | ++ | 4,198 | - | 24 | - |
| Comparative Example 4 | MC-6 [2.0] | | Rapeseed oil [15.0] | Purified water [83.0] | 71,300 (2% by mass aqueous solution) | 71,300 (2% by mass aqueous solution) | 38.1 | - | 16,792 | ++ | 18 | ++ |
| Comparative Example 5 | MC-6 [1.7] | MC-2 [0.3] | Rapeseed oil [15.0] | Purified water [83.0] | 42,800 (2% by mass aqueous solution) | 42,800 (2% by mass aqueous solution) | 36.1 | - | 13,427 | ++ | 15 | ++ |
| Comparative Example 6 | MC-5 [15] | | Rapeseed oil [15.1] | Purified water [83.4] | 2,172 (1.5% by mass aqueous solution) | 7,810 (2% by mass aqueous solution) | 25.5 | + | 3,887 | - | 26 | - |

### <Production of vegan Chinese filled bun (1)>

### [Example 11]

### (Preparation of filling)

To obtain swollen soy protein, 20 parts by mass of granular soy protein are immersed in 45 parts by mass of water for 2 hours to swell the soy protein. To the swollen soy protein, 10 parts by mass of onion, 4 parts by mass of koikuchi soy sauce, 4 parts by mass of mirin, 3.1 parts by mass of sesame oil, 3.1 parts by mass of shiitake mushrooms, 3 parts by mass of boiled bamboo shoots, 3 parts by mass of tomato paste, 2 parts by mass of grated ginger, 2 parts by mass of onion powder, 0.5 parts by mass of salt, 0.3 parts by mass of L-sodium glutamate, and 0.1 parts by mass of pepper are then added, and the ingredients are thoroughly mixed until uniform to obtain 40 g of a food ingredient mixture. To 40 g of the food ingredient mixture, 12 g of the oil-in-water composition of Example 3 (3.3 parts by mass of the food ingredient mixture per 1 part by mass of the oil-in-water composition) is then added, and the ingredients are thoroughly kneaded to obtain a filling.

### (Preparation of dough)

To 29.5 parts by mass of warm water at 35 °C, 7.1 parts by mass of refined sugar and 1.5 parts by mass of dry yeast are added, and the ingredients are thoroughly mixed. The mixture is subjected to pre-fermentation at 35 °C for 20 minutes to obtain a pre-fermented product. To the pre-fermented product, 39.3 parts by mass of soft flour, 19.7 parts by mass of all-purpose flour, 1.8 parts by mass of powdered oil, 0.6 parts by mass of salt, and 0.6 parts by mass of baking powder are then added, and the ingredients are thoroughly stirred and kneaded to obtain a paste. The paste is then subjected to proofing for 20 minutes under conditions of a humidity of 85% and a temperature of 40 °C to obtain a dough.

### (Preparation of Chinese filled bun)

The filling is frozen overnight to obtain a frozen filling. Using 80g of the dough, 40g of the frozen filling is enclosed therein to obtain a raw Chinese filled bun. The raw Chinese filled bun is then subjected to steam heating at 180 °C for 30 minutes to obtain a Chinese filled bun.

The Chinese filled bun of Example 11 exhibits a smaller change in the weight of filling before and after heating, and shows excellent food texture, and excellent shape retention even at a low temperature of the filling.

### <Production of vegan Chinese filled bun (2)>

### [Example 12]

### <Preparation of oil-in-water composition>

Using MC-7 and MC-8 as the first and second MC powders, respectively, and sesame oil as the edible oil, an oil-in-water composition was obtained in the same manner as in Example 1. The amounts of the respective components used were as follows: 0.5 parts by mass of the first MC powder, 0.5 parts by mass of the second MC powder, 3.1 parts by mass of the edible oil, and 25 parts by mass of water (total amount 29.1 parts by mass). In addition, the mixture composed of the first MC powder and the second MC powder had a viscosity of 7,020 mPa·s when measured at 20 °C using a 2% by mass aqueous solution, as shown in the results of Example 10 in Table 2.

### (Preparation of filling)

To obtain swollen soy protein, 10 parts by mass of granular soy protein were immersed in 30 parts by mass of water for 2 hours to swell the soy protein. To the swollen soy protein, 10 parts by mass of onion (minced) , 4 parts by mass of koikuchi soy sauce, 4 parts by mass of mirin, 3 parts by mass of raw shiitake mushrooms (shredded), 3 parts by mass of boiled bamboo shoots (shredded), 3 parts by mass of tomato paste, 2 parts by mass of grated ginger, 2 parts by mass of onion powder, 0.5 parts by mass of salt, 0.3 parts by mass of L-sodium glutamate, and 0.1 parts by mass of pepper were then added, and the ingredients were thoroughly mixed until uniform to obtain 71.9 parts by mass of a food ingredient mixture. To 71.9 parts by mass of the food ingredient mixture, 29.1 parts by mass of the oil-in-water composition of Example 12 (3.3 parts by mass of the food ingredient mixture per 1 part by mass of the oil-in-water composition) was then added, and the ingredients were thoroughly kneaded to obtain a filling. The filling was placed in molds in 40 g portions, cooled in a refrigerator for 2 hours, and subsequently frozen in a freezer.

### (Preparation of dough)

To 50 parts by mass of warm water at 35 °C, 12 parts by mass of refined sugar and 2.5 parts by mass of dry yeast were added, and the ingredients were thoroughly mixed. The mixture was subjected to pre-fermentation at 35 °C for 20 minutes to obtain a pre-fermented product. To the pre-fermented product, 66.7 parts by mass of soft flour, 33.3 parts by mass of all-purpose flour, 3 parts by mass of powdered oil, 1 part by mass of salt, and 1 part by mass of baking powder were then added, and the ingredients were thoroughly stirred and kneaded to obtain a paste. The paste was then subjected to proofing for 20 minutes under conditions of a humidity of 85% and a temperature of 40 °C to obtain a dough.

### (Preparation of Chinese filled bun)

Using 80g of the dough, 40g of the frozen filling was wrapped therein to obtain a raw Chinese filled bun. The raw Chinese filled bun was then subjected to steam heating at 100 °C for 20 minutes to obtain a Chinese filled bun.

### [Comparative Examples 7 and 8]

The oil-in-water compositions of Comparative Examples 7 and 8 were prepared in the same manner as in Example 12, except that only the first MC powder was used in place of the mixture composed of the first and second MC powders. Furthermore, fillings, doughs, and Chinese filled buns were prepared using these oil-in-water compositions. In addition, the oil-in-water composition of Comparative Example 7 was prepared using 1.0 part by mass of MC-9 as the first MC powder, while the oil-in-water composition of Comparative Example 8 was prepared using 0.6 parts by mass of MC-7 as the first MC powder.

### [Reference Example 1]

To obtain swollen soy protein, 10 parts by mass of granular soy protein were immersed in 55 parts by mass of water for 2 hours to swell the soy protein. To the swollen soy protein, 10 parts by mass of onion (minced) , 4 parts by mass of koikuchi soy sauce, 4 parts by mass of mirin, 3 parts by mass of raw shiitake mushrooms (shredded), 3 parts by mass of boiled bamboo shoots (shredded), 3 parts by mass of tomato paste, 2 parts by mass of grated ginger, 2 parts by mass of onion powder, 0.5 parts by mass of salt, 0.3 parts by mass of L-sodium glutamate, and 0.1 parts by mass of pepper, and 3.1 parts by mass of sesame oil were then added, and the ingredients were thoroughly mixed until uniform to obtain 100 parts by mass of a food ingredient mixture. The resulting food ingredient mixture was used as a filling. The filling was placed in molds in 40 g portions, cooled in a refrigerator for 2 hours, and subsequently frozen in a freezer.

A dough and Chinese filled bun were prepared in the same manner as in Example 12.

### [Evaluation of filling after microwave heating]

One frozen filling from each of Examples 12, Comparative Examples 7 to 8, and Reference Example 1 was placed on a colander set over a bowl. The set of colander and bowl containing the frozen filling was placed in a microwave oven and subjected to microwave heating treatment at 600 W for 2 minutes.

Upon observation of the appearance of the filling on the colander after microwave heating treatment, the fillings of Example 12 and Comparative Examples 7 and 8 were in a gel state and maintained a cohesive state. In contrast, the filling of Reference Example 1 lacked binding properties, and was in a separated granular state, and failed to maintain a cohesive state.

After removing the colander on which the filling after microwave heating treatment had been placed, the liquid (drip) released from the filling during microwave heating treatment and remaining in the bowl was observed. The drip released from each of the fillings of Example 12 and Comparative Examples 7 and 8 was in a liquid state, and did not exhibit thermal gelling properties.

After microwave heating treatment, the mass of the filling remaining on the colander and the mass of the drip in the bowl were measured. The amount of evaporated liquid was calculated by subtracting these masses from the initial mass of the filling (40g). The results are shown in Table 3.

**[Table 3]**

| | [A] Mass of filling | | [B] Mass of drip | | [C] Amount of evaporated liquid | | [B]+[C] | |
|---|---|---|---|---|---|---|---|---|
| | [g] | [wt%] | [g] | [wt%] | [g] | [wt%] | [g] | [wt%] |
| Example 12 | 31.6 | 79.0 | 3.9 | 9.8 | 4.5 | 11.3 | 8.4 | 21.0 |
| Comparative Example 7 | 29.7 | 74.3 | 3.6 | 9.0 | 6.7 | 16.8 | 10.3 | 25.8 |
| Comparative Example 8 | 27.7 | 69.3 | 5.5 | 13.8 | 6.8 | 17.0 | 12.3 | 30.8 |
| Reference Example 1 | 26.3 | 65.8 | 4.8 | 12.0 | 8.9 | 22.3 | 13.7 | 34.3 |

As shown in Table 3, the mass of the filling after microwave heating treatment was the largest in Example 12, and the smallest in Reference Example 1. Comparative Examples 7 and 8 exhibited larger amounts of evaporated liquid, greater mass losses due to heating, and lower mass retention, as compared with Example 12.

The filling after microwave heating treatment was cooled to 25 °C, and the fracture strength of the cooled filling was measured at 25 °C using a texture analyzer with a penetration rate of 2 mm/s and a cylindrical probe. As a result, the fracture strength of Example 12 at a penetration distance of 10 mm was 4.91 N, which was greater than those of the other samples (2.41 N to 4.71 N).

### [Evaluation of Chinese filled bun after steam heating]

One Chinese filled bun (N=3) from each of Example 12, Comparative Examples 7 and 8, and Reference Example 1 was placed on a plate and subjected to steam heating treatment at 100 °C for 20 minutes. After steam heating treatment, the filling and the dough wrapping the filling were separated from the Chinese filled bun.

Upon observation of the appearance of the filling separated from the Chinese filled bun after steam heating treatment, the fillings of Example 12 and Comparative Example 7 were thermally gelled, exhibited no syneresis, and had moist surfaces. In contrast, the filling of Reference Example 1 exhibited a crumbly texture and contained a large amount of moisture. The filling of Comparative Example 8 was thermally gelled, but exhibited a certain degree of syneresis.

After steam heating treatment, the mass of the filling separated from the Chinese filled bun, the mass of the released liquid (drip), and the mass of the liquid absorbed by the dough (the increased amount of the dough) were measured. The standard mass was set at 40 g. The results are shown in Table 4.

**[Table 4]**

| | [A] Mass of filling | [B] Mass of drip | [C] Increased amount of dough | [B]+[C] |
|---|---|---|---|---|
| | [g] | [g] | [g] | [g] |
| Example 12 | 33.4 | 0.0 | 6.6 | 6.6 |
| Comparative Example 7 | 32.0 | 0.0 | 8.0 | 8.0 |
| Comparative Example 8 | 32.1 | 0.7 | 7.2 | 7.9 |
| Reference Example 1 | 23.7 | 4.9 | 11.4 | 16.3 |

As shown in Table 4, the mass of the filling after steam heating was the largest in Example 12, and the smallest in Reference Example 1. In addition, Comparative Examples 7 and 8 exhibited a greater amount of liquid transferred from the filling into the dough and tended to result in a softer dough, as compared with Example 12.

The filling after steam heating was cooled to 25 °C, and the fracture strength of the cooled filling was measured at 25 °C using a texture analyzer with a penetration rate of 2 mm/s and a cylindrical probe. As a result, the fracture strength of Example 12 at a penetration distance of 10 mm was 6.04 N, which was greater than those of the other samples (1.01 N to 5.33 N).

### Industrial applicability

The oil-in-water composition according to one embodiment of the present invention can be used to produce a filling that suppresses syneresis caused by heat cooking, and further exhibits excellent gel elasticity upon heating and excellent shape retention during reduction in product temperature, as well as a filled food using the filling. The filling and the filled food according to one embodiment of the present invention can be used as Chinese filled bun, dumpling, shumai, bread, pie, donut, and the like.

### Cross-reference of related applications

The present application claims the benefit of priorities to Japanese Patent Applications No. 2025-087966 filed on May 27, 2025 and No. 2025-147356 filed on September 5, 2025, the disclosure of which is incorporated herein by reference in its entirety. The disclosure of all the documents described herein including Patent Documents 1 to 3 is incorporated herein by reference in its entirety.

## Claims

1. An oil-in-water composition,
comprising a methylcellulose mixture composed of two or more types of methylcellulose whose viscosities are different from one another, oil and water,
wherein the methylcellulose mixture has a viscosity of 500 mPa·s to 40,000 mPa·s when measured with a viscometer at 20 °C using a 2% by mass aqueous solution, and
wherein the composition has an oil content of 5% by mass or more and less than 20% by mass relative to the total amount of the oil-in-water composition.

2. The oil-in-water composition according to claim 1, wherein the composition has a gel disappearance temperature of 22 °C or lower, a gel strength at 90°C of 5,000 Pa or higher, and/or a syneresis rate of less than 25.0%.

3. The oil-in-water composition according to claim 1, wherein the methylcellulose mixture is composed of a first methylcellulose having a viscosity of 60,000 mPa·s to 150,000 mPa·s when measured with a viscometer at 20 °C using a 2% by mass aqueous solution and a second methylcellulose having a viscosity of 3 mPa·s to 5,500 mPa·s when measured with a viscometer at 20 °C using a 2% by mass aqueous solution.

4. The oil-in-water composition according to claim 3, wherein a mass ratio of the first methylcellulose relative to the second methylcellulose in the methylcellulose mixture (first methylcellulose : second methylcellulose) falls within the range between 2.0:8.0 and 8.0:2.0.

5. A filling,
comprising the oil-in-water composition according to any one of claims 1 to 4 and a food ingredient.

6. The filling according to claim 5, wherein the food ingredient is a non-heated food ingredient.

7. The filling according to claim 5, substantially free of native gellan gum and glucomannan.

8. A filled food,
being a heated, baked, or oil-cooked product of a raw filled food composed of the filling according to claim 5 and a dough wrapping the filling.

9. The filled food according to claim 8, wherein the filled food is Chinese filled bun, dumpling, shumai, bread, pie, or donut.
